Europäisches Patentamt

(19) European Patent Office

Office européen des brevets

(11) Numéro de publication : **0 288 341 B1**

(12) **FASCICULE DE BREVET EUROPEEN**

(45) Date de publication du fascicule du brevet :
**11.12.91 Bulletin 91/50**

(21) Numéro de dépôt : **88400676.8**

(22) Date de dépôt : **21.03.88**

(51) Int. Cl.⁵ : **B60G 15/06**

(54) **Jambe télescopique de suspension pour roue d'un véhicule automobile.**

(30) Priorité : **24.03.87 FR 8704082**

(43) Date de publication de la demande :
**26.10.88 Bulletin 88/43**

(45) Mention de la délivrance du brevet :
**11.12.91 Bulletin 91/50**

(84) Etats contractants désignés :
**DE ES GB IT**

(56) Documents cités :
**DE-A- 2 713 133
DE-A- 2 834 528
DE-A- 3 528 799
FR-A- 2 513 334
US-A- 2 927 786**

(73) Titulaire : **AUTOMOBILES PEUGEOT
75, avenue de la Grande Armée
F-75116 Paris (FR)**
Titulaire : **AUTOMOBILES CITROEN
62 Boulevard Victor-Hugo
F-92200 Neuilly-sur-Seine (FR)**

(72) Inventeur : **Charant, André
142, Avenue Pierre Brosselette
F-92240 Malakoff (FR)**
Inventeur : **Petiot, Jean-Paul
42, Route d'Orsay
F-91460 Marcoussis (FR)**

(74) Mandataire : **Durand, Yves Armand Louis et al
CABINET WEINSTEIN 20, Avenue de
Friedland
F-75008 Paris (FR)**

EP 0 288 341 B1

# Description

La présente invention concerne une jambe télescopique de suspension pour une roue d'un véhicule automobile, selon le préambule de la revendication 1.

De telles jambes télescopiques sont connues comme comprenant un amortisseur hydraulique constitué d'un élément tubulaire inférieur et d'une tige supérieure montée coulissante dans l'élément tubulaire inférieur ; une cuvette inférieure solidaire de l'élément tubulaire, une cuvette supérieure entourant la tige supérieure ; un ressort entourant l'amortisseur et monté entre les cuvettes inférieure et supérieure ; et une coupelle dite limiteur d'attaque à alésage axial entourant la tige supérieure et disposée au dessus de la cuvette supérieure, laquelle est montée pivotante à la coupelle. Cette jambe connue comporte de plus à l'extrémité de la tige supérieure un filetage permettant la fixation de la jambe à la carrosserie du véhicule à l'aide d'un écrou.

Avant le montage de la jambe télescopique à la carrosserie du véhicule, le ressort hélicoïdal doit être précontraint. Des moyens sont donc prévus pour solidariser la coupelle de la tige supérieure de l'amortisseur, la tige étant elle-même en appui sur sa butée supérieure à l'intérieur de l'amortisseur. Lorsque la jambe est montée, le poids de la caisse accroît la précontrainte du ressort et libère la tige de sa butée supérieure.

Les moyens utilisés jusqu'à maintenant pour solidariser la coupelle limiteur d'attaque de la tige supérieure de l'amortisseur comprennent un écrou d'accouplement sur l'extrémité supérieure de la tige.

Ce moyen de solidarisation a pour inconvénient d'entraîner une augmentation de volume sous la carrosserie du véhicule, ce qui oblige à diminuer la course de l'ensemble porteur du ressort ou de réhausser le point haut de cet ensemble porteur.

La présente invention a pour but d'éliminer les inconvénients ci-dessus en prévoyant un moyen de solidarisation de la coupelle à la tige supérieure de l'amortisseur d'une structure réduisant considérablement le volume sous la carrosserie et permettant de plus un montage automatique notamment par robot.

Pour cela, la jambe télescopique de l'invention est caractérisée en ce que le moyen de solidarisation de la coupelle à la tige supérieure comprend un jonc élastique disposé en appui entre la coupelle et une collerette de la tige supérieure située au-dessus de la coupelle de manière à transmettre à la tige la précontrainte exercée par le ressort sur la coupelle.

Selon une caractéristique de l'invention, la tige supérieure comprend en-dessous de sa collerette une gorge circulaire de positionnement du jonc élastique et la coupelle comprend un épaulement à profil torique dans lequel est logé le jonc élastique.

Selon encore une autre caractéristique de l'invention, la collerette de la tige supérieure comprend un épaulement inférieur à profil torique et la coupelle comprend un épaulement également à profil torique entre lesquels est logé le jonc élastique.

Selon toujours une autre caractéristique de l'invention, la coupelle comprend une gorge approximativement circulaire dans le prolongement supérieur de l'épaulement de la coupelle et la collerette comprend un chanfrein au-dessus de son épaulement inférieur adapté pour dilater le jonc élastique dans la gorge de la coupelle lors du passage de la tige supérieure dans l'alésage de la coupelle.

L'invention sera mieux comprise, et d'autres buts, caractéristiques, détails de celle-ci apparaîtront plus clairement au cours de la description explicative qui va suivre faite en référence aux dessins schématiques annexés donnés uniquement à titre d'exemple illustrant plusieurs modes de réalisation de l'invention, et dans lesquels :

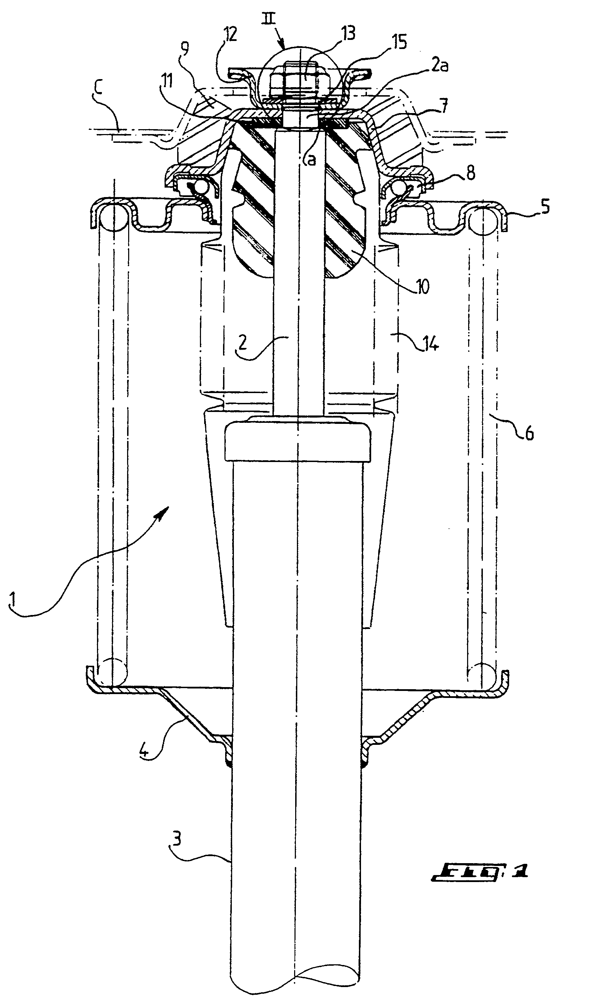

La figure 1 représente une vue en coupe longitudinale de la partie supérieure de la jambe télescopique selon l'invention fixée sous la carrosserie d'un véhicule ;

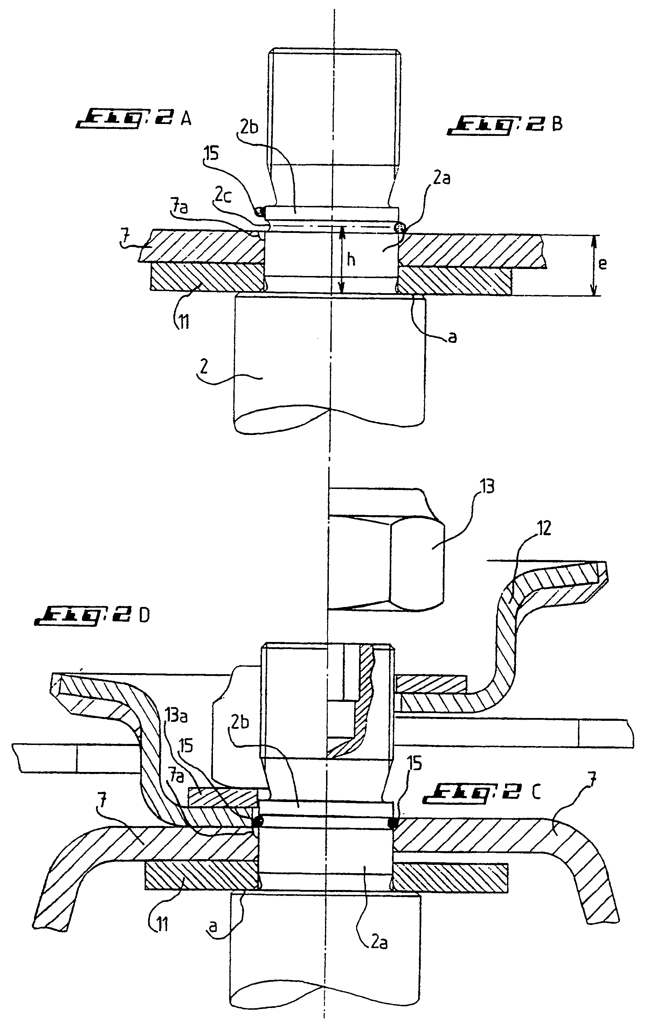

Les figures 2A-2D sont des demi-vues agrandies de la partie cerclée en II de la figure 1 selon un premier mode de réalisation et représentant respectivement l'étape initiale avant mise en place du moyen de solidarisation de la coupelle à la tige supérieure d'amortisseur, la mise en place du moyen de solidarisation, la coupelle solidarisée à la tige d'amortisseur et le montage sous la carrosserie du véhicule de la jambe télescopique ;

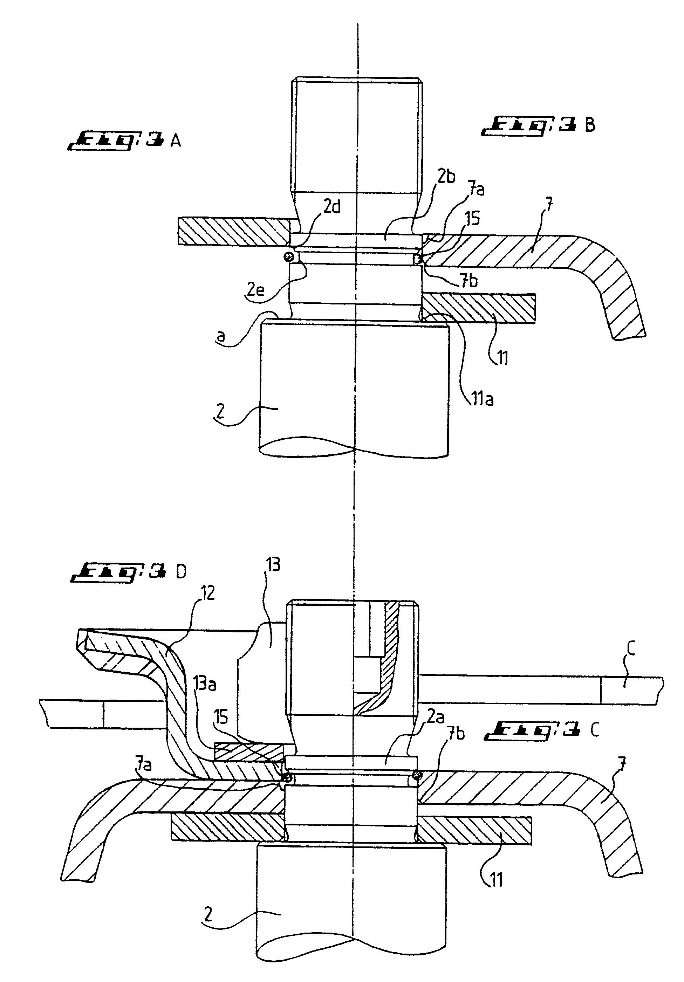

Les figures 3A-3D sont également des demi-vues agrandies de la partie cerclée en II sur la figure 1 suivant un deuxième mode de réalisation de l'invention et représentant respectivement l'état initial avant mise en place du moyen de solidarisation, la mise en place de ce moyen de solidarisation, la coupelle solidarisée à la tige d'amortisseur et le montage de la jambe télescopique à la carrosserie du véhicule ; et

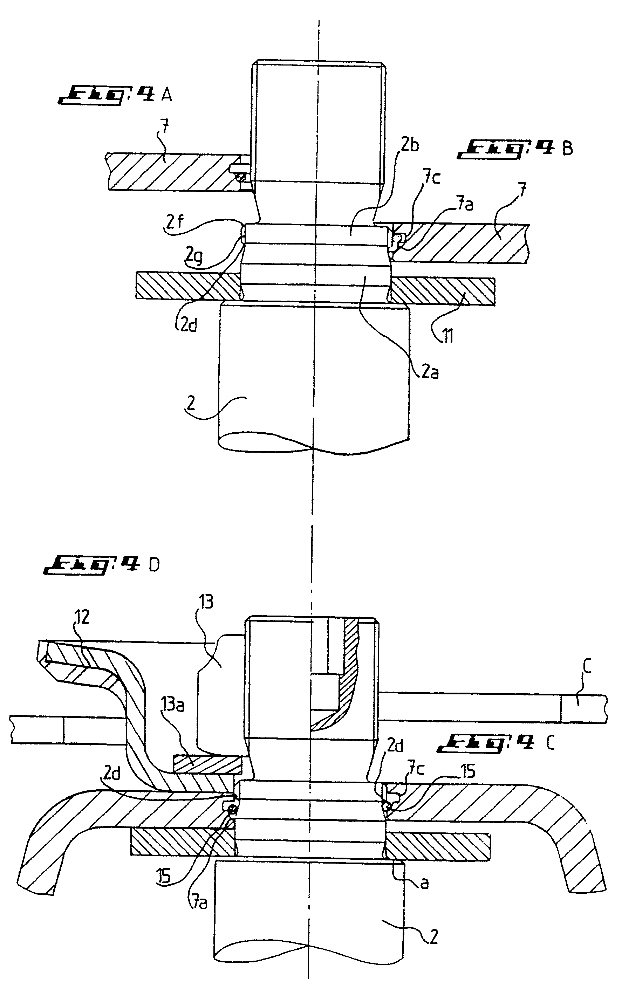

Les figures 4A-4D sont également des demi-vues agrandies de la partie cerclée II sur la figure 1 selon un troisième mode de réalisation et représentant respectivement l'état initial avant mise en place du moyen de solidarisation, la mise en place de ce moyen de solidarisation, la coupelle solidarisée à la tige d'amortisseur et le montage de la jambe télescopique à la carrosserie du véhicule.

En se reportant à la figure 1, la jambe télescopique de suspension pour une roue d'un véhicule automobile comprend un amortisseur hydraulique 1 constitué essentiellement d'une tige supérieure télescopique 2 montée de façon coulissante dans un élément tubulaire inférieur 3 ; une cuvette inférieure 4 solidaire, par exemple par une soudure, de l'élément tubulaire 3 ; une cuvette supérieure 5 entourant coaxialement la tige supérieure 2 ; un ressort précontraint 6 entourant coaxialement l'amortisseur 1 et monté entre les cuvettes inférieure 4 et supérieure 5; et une coupelle limiteur d'attaque 7 disposée au-dessus de la cuvette 5 et présentant une forme approximativement tronconique de section décroissante vers le haut par rapport à la figure 1. La partie supérieure de la coupelle 7 comporte un alésage axial à travers lequel passe une partie supérieure de plus faible diamètre 2a de la tige 2 d'amortisseur. Entre la partie de plus grand diamètre de la section tronconique de la coupelle 7 et la cuvette supérieure 5 est montée une butée à billes 8 assurant le pivotement de la cuvette 5 autour de l'axe longitudinal de l'amortisseur par rapport à la coupelle 7. Un élément en caoutchouc 9 est monté entre un logement de forme tronconique de section décroissante vers le haut de la carrosserie C du véhicule et la partie extérieure tronconique de la coupelle 7. Un autre élément en caoutchouc 10 formant butée d'attaque est monté coaxialement autour de la tige 2 et fixé à sa partie supérieure de forme tronconique à la partie tronconique inférieure correspondante de la coupelle 7, par exemple par vulcanisation. Une rondelle 11 en partie noyée dans l'élément en caoutchouc 10 est disposée entre la partie supérieure de la coupelle 7 et un épaulement a de la tige 2 définissant la partie de plus faible diamètre 2a. Cette rondelle a pour fonction de répartir les efforts de poussée exercés par la carrosserie du véhicule sur la coupelle 7. Une cuvette supérieure d'emprisonnement 12 est fixée à la tige 2 d'amortisseur, en reposant sur la partie supérieure de la coupelle 7, par l'intermédiaire d'un écrou 13 vissé et serré à l'extrémité libre de la partie de plus faible diamètre 2a de la tige 2 après que la jambe télescopique ait été introduite dans la carrosserie C. La référence 14 représente schématiquement un organe formant soufflet de protection disposé entre l'élément tubulaire 3 et la coupelle 7 tout en entourant la tige 2 d'amortisseur.

La coupelle 7, avant montage de la jambe télescopique à la carrosserie C du véhicule, est montée solidaire de la partie de plus faible diamètre 2a de la tige 2 par l'intermédiaire d'un organe formant jonc élastique 15 représenté plus en détail aux figures 2A-2D.

Comme cela ressort plus clairement de la figure 2A, la partie de plus faible diamètre 2a de la tige 2 comprend une collerette 2b dans le prolongement inférieur de laquelle est réalisée une gorge approximativement circulaire 2c de positionnement du jonc élastique 15. La profondeur de la gorge 2c est au moins égale à la moitié du diamètre de la section du jonc 15. Pour permettre l'introduction du jonc 15 dans la gorge 2c, la hauteur h de cette gorge par rapport à l'épaulement a de la tige 2 doit être supérieure à l'épaisseur e résultant de la somme des épaisseurs de la coupelle 7 et de la rondelle 11 d'une valeur au moins égale à la moitié du diamètre de la section du jonc 15. La coupelle 7 comprend au niveau du bord supérieur de son alésage axial un épaulement à profil torique 7a dans lequel se loge le jonc élastique 15 une fois la coupelle 7 solidarisée à la tige 2 d'amortisseur avant montage de la jambe télescopique de la carrosserie C du véhicule comme représenté en figure 2C.

Comme il ressort respectivement des figures 2A-2D, le jonc 15 est tout d'abord introduit dans la gorge 2c après précontrainte du ressort hélicoïdal 6. Une fois le jonc 15 introduit dans la gorge 2c, la précontrainte exercée par le ressort 6 sur la coupelle 7 est transmise à la tige 2 par l'intermédiaire du jonc 15 qui se trouve en appui entre la collerette 2b et l'épaulement 7a de la coupelle 7 comme représenté en figure 2C. Au montage de la jambe télescopique sous la carrosserie C du véhicule, l'ensemble formé par la rondelle 11, la coupelle 7 et la cuvette supérieure d'emprisonnement 12 est monté serré en sandwich contre l'épaulement a de la tige 2 par l'écrou 13 et rondelle associée 13a. A cette position de montage, le jonc 15 est emprisonné entre la gorge 2c et l'alésage correspondant de la cuvette 12.

Suivant le deuxième mode de réalisation représenté aux figures 3A-3D, la collerette 2a comprend successivement dans son prolongement inférieur un épaulement inférieur 2d à profil torique et une gorge approximativement circulaire 2e, dont la profondeur est au moins égale au diamètre de la section du jonc 15. La coupelle 7 comporte un épaulement supérieur 7a à profil torique comme dans le premier mode de réalisation et à l'opposé de celui-ci, au niveau du bord inférieur de l'alésage de la coupelle, un chanfrein 7b. De même, la rondelle 11 possède un chanfrein 11a à l'entrée de l'alésage de celle-ci faisant face à l'épaulement 2a de la tige 2. On comprend que le jonc 15 est préalablement monté autour de la partie de plus faible diamètre 2a de la tige 2 au niveau de la gorge 2e d'un diamètre extérieur inférieur au diamètre intérieur du jonc 15 de manière à permettre à celui-ci de se rétracter lors de l'introduction de la rondelle 11 et de la coupelle 7 autour de la partie 2a. Ainsi, les chanfreins 11a et 7b permettent de comprimer le jonc 15 dans la gorge 2e lors du passage de la partie 2a de la tige 2 dans les alésages correspondants de la rondelle 11 et de la coupelle 7. Une fois cette opération effectuée, le jonc 15 reprend sa forme initiale de manière à se trouver en appui entre l'épaulement inférieur 2d et l'épaulement 7a de la coupelle 7 pour transmettre à la tige 2 la contrainte exercée par le ressort 6 sur la coupelle 7 comme représenté en figure 3C. Ce mode de réalisation est avantageux par rapport au premier mode de réalisation en ce qu'il autorise une précontrainte du ressort plus faible que dans le premier mode de réalisation pour mettre en place le jonc 15 entre les épaulements 2d et 7a. Au montage de la jambe télescopique en-dessous de la carrosserie du véhicule, l'ensemble constitué par la rondelle 11, la coupelle 7 et la cuvette supérieure 12 est monté serré en sandwich entre l'épaulement a de la tige 2 et l'écrou de serrage 13. A cette position, le jonc 15 vient naturellement par dilatation en appui contre la paroi cylindrique de l'alésage correspondant de la cuvette 12.

Selon le troisième mode de réalisation représenté aux figures 4A-4D, la coupelle 7 comprend l'épaulement à profil torique 7a pratiqué dans l'alésage de la coupelle et dans le prolongement supérieur duquel est réalisé une gorge approximativement circulaire 7c, dont la profondeur est au moins égale au diamètre de la section du jonc 15. En plus de l'épaulement inférieur 2d comme dans le deuxième mode de réalisation, la collerette 2b comprend un chanfrein 2f au-dessus dudit épaulement. Deux rainures 2g sont également pratiquées dans la collerette 2a pour permettre l'engagement d'un outil de démontage. Suivant ce mode de réalisation, la rondelle 11 est tout d'abord montée autour de la partie 2a de plus faible diamètre de la tige 2 laquelle est ensuite passée à travers l'alésage de la coupelle 7. Le chanfrein 2f permet de dilater le jonc 15 dans la gorge 7c de la coupelle pendant le passage de la tige 2 comme représenté en figure 4B. A la position représentée en figure 4C, le jonc 15 se trouve en appui entre l'épaulement inférieur 2d de la collerette 2a et l'épaulement 7a de la coupelle 7 sous la précontrainte exercée par le ressort 6 de la coupelle. Après serrage de l'écrou 13, l'ensemble constitué par la rondelle 11, la coupelle 7 et la cuvette supérieure 12 se trouve monté serré en sandwich entre cet écrou et l'épaulement a de la tige 2, le jonc 15 se trouvant en appui sensiblement entre la paroi de liaison de l'épaulement 7a à la gorge 7c et une paroi correspondante de la partie 2a en-dessous de l'épaulement 2d. Comme pour le deuxième mode de réalisation, ce mode de réalisation a pour avantage de limiter la précontrainte exercée au ressort 6 pour mettre en place le jonc 15 à la position représentée en figure 4C.

En prévoyant un jonc d'arrêt permettant de solidariser la coupelle limiteur d'attaque 7 à la tige supérieure 2 d'un amortisseur hydraulique, on diminue considérablement l'encombrement sous la carrosserie du véhicule. De plus, le montage notamment du train avant du véhicule s'en trouve facilité et peut être facilement effectué automatiquement par robotisation.

monté entre les cuvettes inférieure et supérieure ; une coupelle limiteur d'attaque à alésage axial entourant la tige supérieure et disposée au-dessus de la cuvette supérieure laquelle est montée pivotante à la coupelle ; et un moyen de solidarisation de la coupelle à la tige supérieure avant montage de la jambe à la carrosserie du véhicule ; caractérisée en ce que le moyen de solidarisation comprend un jonc élastique (15) disposé en appui entre la coupelle (7) et une collerette (2b) de la tige supérieure (2) située au-dessus du jonc élastique (15) de manière à transmettre à la tige (2) la précontrainte exercée par le ressort (6) sur la coupelle (7).

2. Jambe télescopique selon la revendication 1, caractérisée en ce que la tige (2) comprend en-dessous de sa collerette (2a) une gorge circulaire (2c) de positionnement du jonc élastique (15) et en ce que la coupelle (7) comprend un épaulement à profil torique (7a) dans lequel est logé le jonc élastique (15).

3. Jambe télescopique selon la revendication 1, caractérisée en ce que la collerette (2b) de la tige (2) comprend un épaulement inférieur à profil torique (2d) et en ce que la coupelle (7) comprend un épaulement à profil torique (7a) entre lesquels est logé le jonc élastique (15).

4. Jambe télescopique selon la revendication 3, caractérisée en ce que la tige (2) comprend en-dessous de l'épaulement inférieur (2d) une gorge circulaire (2e), dont la profondeur est au moins égale au diamètre de la section du jonc élastique (15) et en ce que la coupelle (7) comprend un chanfrein (7b) en-dessous de l'épaulement supérieur (7a) de la coupelle (7) et comprimant le jonc élastique (15) dans la gorge (2e) de la tige (2) lors du passage de la tige (2) dans l'alésage de la coupelle (7).

5. Jambe télescopique selon la revendication 3, caractérisée en ce que la coupelle (7) comprend une gorge approximativement circulaire (7c) dans le prolongement supérieur de l'épaulement (7a) de la coupelle (7) et dont la profondeur est au moins égale au diamètre de la section du jonc (15) et en ce que la collerette (2a) comprend un chanfrein (2f) au-dessus de son épaulement inférieur (2d) adapté pour dilater le jonc élastique (15) dans la gorge (7c) de la coupelle (7) lors du passage de la tige (2) dans l'alésage de la coupelle (7).

## Revendications

1. Jambe télescopique de suspension pour une roue d'un véhicule automobile, du type comprenant un amortisseur hydraulique constitué d'un élément tubulaire inférieur et d'une tige supérieure montée coulissante dans l'élément tubulaire inférieur ; une cuvette inférieure solidaire de l'élément tubulaire ; une cuvette supérieure entourant la tige supérieure ; un ressort précontraint entourant l'amortisseur et

## Patentansprüche

1. Teleskopisches Aufhängungsbein für ein Rad eines Kraftfahrzeugs, derjenigen Gattung mit einem aus einem unteren röhrförmigen Element und einer in dem unteren röhrförmigen Element gleitbar angeordneten oberen Stange bestehenden hydraulischen Stossdämpfer ; einen mit dem röhrförmigen Element festverbundenen unteren Federteller ; einen die obere Stange umgebenden oberen Federteller ; einer den Stossdämpfer umgebenden und zwischen dem unteren und oberen Federteller angeordneten vorgespannten Feder; einem den Angriff begrenzenden, die obere Stange umgebenden Näpfchen mit Axialbohrung, welches oberhalb des oberen Federtellers, der schwenkbar an dem Näpfchen angebracht ist, angeordnet ist; und einem Mittel zur festen Verbindung des Näpfchens mit der oberen Stange vor dem Einbau des Federbeins in den Kasten des Fahrzeugs; dadurch gekennzeichnet, dass das Mittel zur festen Verbindung einen Federring (15) aufweist, der in Abstützung zwischen dem Näpfchen (7) und einem Bund (2b) der oberen Stange (2), welcher oberhalb des Federrings (15) liegt, angeordnet ist, um auf die Stange (2) die durch die Feder (6) auf das Näpfchen (7) ausgeübte Vorspannung zu übertragen.

2. Teleskopisches Federbein gemäss Anspruch 1, dadurch gekennzeichnet, dass die Stange (2) unterhalb ihres Bundes (2a) eine kreisförmige Nut (2c) zum Positionieren des Federrings (15) aufweist und dass das Näpfchen (7) eine Schulter mit torischem Profil (7a) in welchem der Federring (15) untergebracht ist, aufweist.

3. Teleskopisches Federbein gemäss Anspruch 1, dadurch gekennzeichnet, dass der Bund (2b) der Stange (2) eine untere Schulter mit torischem Profil (2d) umfasst und dass das Näpfchen (7) eine Schulter mit torischem Profil (7a) zwischen welchen der Federring (15) untergebracht ist, aufweist.

4. Teleskopisches Federbein gemäss Anspruch 3, dadurch gekennzeichnet, dass die Stange (2) unterhalb der unteren Schulter (2d) eine kreisförmige Nut (2e) aufweist, deren Tiefe dem Durchmesser des Querschnitts des Federrings (15) wenigstens gleich ist und dass das Näpfchen (7) eine Abfasung (7b) unterhalb der oberen Schulter (7a) des Näpfchens (7) umfasst und welche den Federring (15) in der Nut (2e) der Stange (2) während dem Durchgang der Stange (2) in der Bohrung des Näpfchens (7) zusammendrückt.

5. Teleskopisches Federbein gemäss Anspruch 3, dadurch gekennzeichnet, dass das Näpfchen (7) eine ungefähr kreisförmige Nut (7c) in der oberen Fortsetzung der Schulter (7a) des Näpfchens (7) umfasst und deren Tiefe dem Durchmesser des Querschnitts des Federrings (15) wenigstens gleich ist und dass der Bund (2a) oberhalb ihrer unteren Schulter (2d) eine Abfasung (2f) aufweist, welche Schulter bestimmt ist, den Federring (15) in der Nut (7c) des Näpfchens (7) während dem Durchführen der Stange (2) in der Bohrung des Näpfchens (7) aufzuweiten.

an upper rod slidably mounted into the lower tubular element; a lower cup made fast to the tubular element; an upper cup surrounding the upper rod; a prestressed spring surrounding the damper and mounted between the lower and upper cups; a stroke-limiting cup with an axial bore surrounding the upper rod and disposed above the upper cup which is pivotally mounted on the cap; and a means for making the cap fast to the upper rod prior to the mounting of the strut onto the body of the vehicle; characterized in that the fastening means comprises an elastic ring (15) disposed in bearing relationship between the cap (7) and a collar (2b) of the upper rod (2) located above the elastic ring (15) so as to convey to the rod (2) the pre-stress exerted by the spring (6) upon the cap (7).

2. Telescoping strut according to claim 1, characterized in that the rod (2) comprises underneath its collar (2a) a circular groove (2c) for the positioning of the elastic ring (15) and in that the cap (7) comprises a shoulder with a toric profile (7a) into which is accommodated the snap ring (15).

3. Telescoping strut according to claim 1, characterized in that the collar (2b) of the rod (2) comprises a lower shoulder with a toric profile (2d) and in that the cap (7) comprises a shoulder with a toric profile (7a), between which the snap ring (15) is accommodated.

4. Telescoping strut according to claim 3, characterized in that the rod (2) comprises below the lower shoulder (2d) a circular groove (2e) the depth of which is at least equal to the diameter of the section of the snap ring (15) and in that the cap (7) comprises a chamfer (7b) below the upper shoulder (7a) of the cap (7) and compressing the snap ring (15) within the groove (2e) of the rod (2) upon the passage of the rod (2) into the bore of the cap (7).

5. Telescoping strut according to claim 3, characterized in that the cap (7) comprises an approximately circular groove (7c) in the upper extension of the shoulder (7a) of the cap (7) and the depth of which is at least equal to the diameter of the section of the ring (15) and in that the collar (2a) comprises a chamfer (2f) above its lower shoulder (2d) adapted to expand the elastic ring (15) in the groove (7c) of the cap (7) upon the passage of the rod (2) into the bore of the cap (7).

## Claims

1. Telescoping suspension strut for a wheel of an automotive vehicle, of the type comprising a hydraulic damper consisting of a lower tubular element and of

FIG. 1

_Fig. 2_ A

_Fig. 2_ B

_Fig. 2_ D

_Fig. 2_ C

Fig. 3 A

Fig. 3 B

2d

2b 7a

15 7

2e 7b

a 11

2 11a

Fig. 3 D

13

12

13a

15 C

7a 2a 7b Fig. 3 C

7

11

2

**Fig. 4 A**

**Fig. 4 B**

**Fig. 4 D**

**Fig. 4 C**